# EUROPÄISCHE PATENTSCHRIFT

(11) **EP 1 352 220 B1**
(45) Veröffentlichungstag und Bekanntmachung des Hinweises auf die Patenterteilung: **11.03.2015**
(21) Anmeldenummer: 01989595.2
(22) Anmeldetag: 13.12.2001
(51) Int. Cl.: G01F 23/284

(54) **FÜLLSTANDSMESSGERÄT MIT KOPPELVORRICHTUNG**
FILLING LEVEL MEASURING DEVICE WITH A COUPLING DEVICE
APPAREIL DE MESURE DE NIVEAU DE REMPLISSAGE COMPORTANT UN DISPOSITIF DE COUPLAGE

(30) Priorität: 19.01.2001 DE 10102571
(43) Veröffentlichungstag der Anmeldung: 15.10.2003
(73) Patentinhaber: Endress + Hauser GmbH + Co. KG, 79689 Maulburg (DE)
(72) Erfinder: MICHALSKI, Bernhard, 79689 Maulburg (DE); LÜTKE, Wolfram, 83024 Rosenheim (DE)
(74) Vertreter: Andres, Angelika Maria
(86) Internationale Anmeldenummer: PCT/EP2001/014672
(87) Internationale Veröffentlichungsnummer: WO 2002/057723

(56) Entgegenhaltungen:
- EP-A- 1 039 572
- DE-A- 4 331 353
- DE-A1- 4 240 492
- DE-A1- 4 332 071
- US-A- 3 935 970
- US-A- 5 279 156

## Beschreibung

Die Erfindung betrifft ein Füllstandmeßgerät zur Bestimmung des Füllstandes eines Mediums in einem Behälter.

Bekannte Füllstandmeßgeräte verwenden dazu ein Laufzeitverfahren, zum Beispiel ein TDR - Verfahren mit geführten Impulsen, oder ein anderes Pulsechoverfahren mittels Abstrahlung in Richtung auf das Medium. Dabei wird ein pulsförmiges elektromagnetisches Signal verwendet, das sich mit Lichtgeschwindigkeit ausbreitet. Die Mediumsoberfläche stellt für die Ausbreitung dieses Signals eine Unregelmäßigkeit dar, und somit wird das Signal zum Sender reflektiert.

Um die Laufzeit des reflektierten Sendesignals bestimmen zu können, muß eine Zeitmessung im Nanosekundenbereich durchgeführt werden. Da in diesem Fall elektronische Schaltungen für eine direkte Laufzeitmessung i.d.R. zu langsam arbeiten, muß der Echosignalverlauf auf geeignete Weise in einen zeitgedehnten Maßstab transformiert werden. Dazu wird ein Puls periodisch ausgesendet, dem an einer, von Puls zu Puls fortschreitenden Position durch eine Abtastschaltung eine Signalprobe entnommen wird.

Nach Ablauf eines Meßzyklus, der aus mehreren tausend Einzelperioden bestehen kann, ergibt sich dann ein zeittransformierter Signalverlauf, der den gesamten Laufweg des Signals repräsentiert. Aus diesem läßt sich der Abstand zwischen Mediumoberfläche und Füllstandmeßgerät bestimmen, der ein Maß für den Füllstand ist. Industriell übliche Meßbereiche erstrecken sich von einigen 10 cm bis in Bereiche von bis über 50 m.

Bekannte Füllstandmeßgeräte dieser Art umfassen eine Signalerzeugungsvorrichtung zur Erzeugung sowohl eines Hochfrequenzsendesignales und eines Abtaststeuersignales zur Abtastung des Hochfrequenzsignales, eine Sende und/oder Empfangsvorrichtung und eine durch das Abtaststeuersignal gesteuerte Abtastvorrichtung zur Abtastung des Hochfrequenzsignales, wobei die Signalerzeugungsvorrichtung, die Sende - und/oder Empfangsvorrichtung und die Abtastvorrichtung durch eine Koppelvorrichtung verbunden sind.

In den Druckschriften US-A 6,014,100, DE 4332071 A1 und DE 4240492 A1 werden Zirkulatoren als eine Koppelvorrichtungen gezeigt.

Die Druckschrift US-A 6,014,100 zeigt eine Sende- und Empfangseinheit mit zumindest einem Mikrowellensender, einem Mikrowellen-Empfänger, einer Antenne und einem Zirkulator ("circulator") als Koppelvorrichtung, die den Sende- und Empfangs-Schaltkreis voneinander elektrisch isoliert.

Die DE 4332071 A1 oder der DE 4240492 A1 ist der Zirkulator als Koppelvorrichtung mit der Abtasteinrichtung, über einen Mischer und Vorverstärker verbunden.

Um die Anforderungen für die verschiedenen Meßbereiche erfüllen zu können, sind bei bisherigen Meßvorrichtungen Signalerzeugervorrichtungen und Abtastschaltungen variiert worden. Dies hat aber unerwünschte Verluste in der Anbindung zwischen Signalerzeugungsvorrichtung und Sende- und/oder Empfangsvorrichtung sowie zwischen Sende- und/oder Empfangsvorrichtung und Abtastvorrichtung zur Folge.

Es ist daher eine Aufgabe der vorliegenden Erfindung, die oben genannten Nachteile zu vermeiden und insbesondere Füllstandsmeßvorrichtungen zu schaffen, bei denen Signalerzeugervorrichtungen und Abtastvorrichtungen und Sende - und/oder Empfangsvorrichtung in optimierter Weise miteinander verbunden werden.

Diese Aufgabe wird durch eine erste Variante der Erfindung gelöst, bei der das Füllstandmeßgerät eine Signalerzeugungsvorrichtung zur Erzeugung sowohl eines Hochfrequenzsendesignales und eines Abtaststeuersignales zur Abtastung des Hochfrequenzsignales , eine Sende- und/oder Empfangsvorrichtung und eine durch das Abtaststeuersignal gesteuerte Abtastvorrichtung zur Abtastung des Hochfrequenzsignales aufweist, wobei die Signalerzeugungsvorrichtung, die Sende - und/oder Empfangsvorrichtung und die Abtastvorrichtung durch eine Koppelvorrichtung verbunden sind, die einen Transformator umfaßt.

Diese Aufgabe wird auch durch eine zweite Variante der Erfindung gelöst, bei der das Füllstandmeßgerät eine Signalerzeugungsvorrichtung zur Erzeugung sowohl eines Hochfrequenzsendesignales und eines Abtaststeuersignales zur Abtastung des Hochfrequenzsignales , eine Sende- und/oder Empfangsvorrichtung und eine durch das Abtaststeuersignal gesteuerte Abtastvorrichtung zur Abtastung des Hochfrequenzsignales aufweist, wobei die Signalerzeugungsvorrichtung, die Sende- und/oder Empfangsvorrichtung und die Abtastvorrichtung durch eine Koppelvorrichtung verbunden sind, die mindestens einen Leitungsknoten umfaßt.

Diese Aufgabe wird weiter durch eine dritte Variante der Erfindung gelöst, bei der das Füllstandmeßgerät eine Signalerzeugungsvorrichtung zur Erzeugung sowohl eines Hochfrequenzsendesignales und eines Abtaststeuersignales zur Abtastung des Hochfrequenzsignales , eine Sende- und/oder Empfangsvorrichtung und eine durch das Abtaststeuersignal gesteuerte Abtastvorrichtung zur Abtastung des Hochfrequenzsignales aufweist, wobei die Signalerzeugungsvorrichtung, die Sende - und/oder Empfangsvorrichtung und die Abtastvorrichtung durch eine Koppelvorrichtung verbunden sind, die einen λ/4-Koppler umfaßt.

Bevorzugte Ausführungsformen der dritten Variante des Füllstandsmeßgerätes nach der Erfindung betreffen solche mit λ/4-Kopplern, die Wilkinsonkoppler, Langekoppler, Richtkoppler, Leitungskoppier oder beispielsweise Koaxialkoppler sind.

Bei weiteren bevorzugten Ausführungsformen der Erfindung umfaßt die Signalerzeugungsvorrichtung eine Komparatorschaltung, eine Schwebungsoszillatorschaltung oder eine geregelte Verzögerungsschaltung, die zur Verzögerung des Abtastsignals gegenüber dem Hochfrequenzsendesignal dienen.

Andere bevorzugte Ausführungsformen der Erfindung betreffen Füllstandsmeßgeräte mit Abtastvorrichtungen, die eine Diodenringschaltung oder wenigstens eine Diode und einen Haltekondensator oder eine Mischerschaltung umfassen.

Bei noch anderen bevorzugten Ausführungsformen der Erfindung ist das Hochfrequenzsendesignal ein Burstsignal.

Auf einfache Weise ermöglicht die Erfindung, Sende- und Empfangseigenschaften des Füllstandsmeßgerätes aufeinander für verschiedene Signale und/oder Meßbereiche durch Optimierung eines seiner Bauteile anzupassen.

Darüber hinaus verwendet die Erfindung eine einfache und robuste galvanische Trennung des Sende - und/oder Empfangsvorrichtung vom Rest des Meßgerätes, so daß sich das Füllstandsmeßgerät nach der Erfindung besonders für Einsätze in explosionsgefährdeten Bereichen bzw. Anwendungen eignet.

Nachfolgend wird die Erfindung unter Zuhilfenahme und Verweis auf die beigefügten Zeichnungen am Beispiel verschiedener bevorzugter Ausführungsformen näher erläutert und beschrieben. Dabei werden baugleiche bzw. in ihrer Funktion gleiche Bauteile bzw. Baugruppen der Einfachheit halber mit gleichen Bezugszeichen versehen. Insbesondere zeigen:
- Fig. 1a,b: schematische Gesamtdarstellungen von Füllstandsmeßgeräten;
- Fig. 2: eine schematische Darstellung vom Aufbau eines Füllstandmeßgerätes;
- Fig. 3: eine schematische Darstellung vom Aufbau der ersten Variante des Füllstandsmeßgerätes nach der Erfindung;
- Fig. 4a: eine schematische Darstellung vom Aufbau der zweiten Variante des Füllstandsmeßgerätes nach der Erfindung;
- Fig. 4b: eine schematische Darstellung einer besonderen Ausführungsform einer Koppelvorrichtung eines Füllstandsmeßgerätes nach Fig. 4a;
- Fig. 5a, b, c, d, e: schematische Darstellung vom Aufbau bevorzugter Ausführungsformen der dritten Variante des Füllstandsmeßgerätes nach der Erfindung;
- Fig. 6: eine schematische Darstellung vom Aufbau einer weiteren Variante eines Füllstandsmeßgerätes;
- Fig. 7a: eine schematische Darstellung einer Signalerzeugungsvorrichtung nach der Erfindung und der damit gewonnenen Signale;
- Fig. 7b: eine bevorzugte Ausführungsform der Signalerzeugungsvorrichtung nach Fig. 7a;
- Fig. 7c: eine andere bevorzugte Ausführungsform der Signalerzeugungsvorrichtung nach Fig. 7a;
- Fig. 7d: eine weitere bevorzugte Ausführungsform der Signalerzeugungsvorrichtung nach Fig. 7a;
- Fig. 8a: eine schematische Darstellung einer Abtastvorrichtung nach der Erfindung;
- Fig. 8b: eine bevorzugte Ausführungsform der Abtastvorrichtung nach Fig. 8a;
- Fig. 8c: eine andere bevorzugte Ausführungsform der Abtastvorrichtung nach Fig. 8a;
- Fig. 8d: eine weitere bevorzugte Ausführungsform der Abtastvorrichtung nach Fig. 8a;
- Fig. 9: eine schematische Darstellung einer besonders für Burstsignale geeigneten und bevorzugten Ausführungsform der Erfindung und
- Fig. 10: eine schematische Darstellung einer besonders für Pulssignale geeigneten und bevorzugten Ausführungsform der Erfindung.

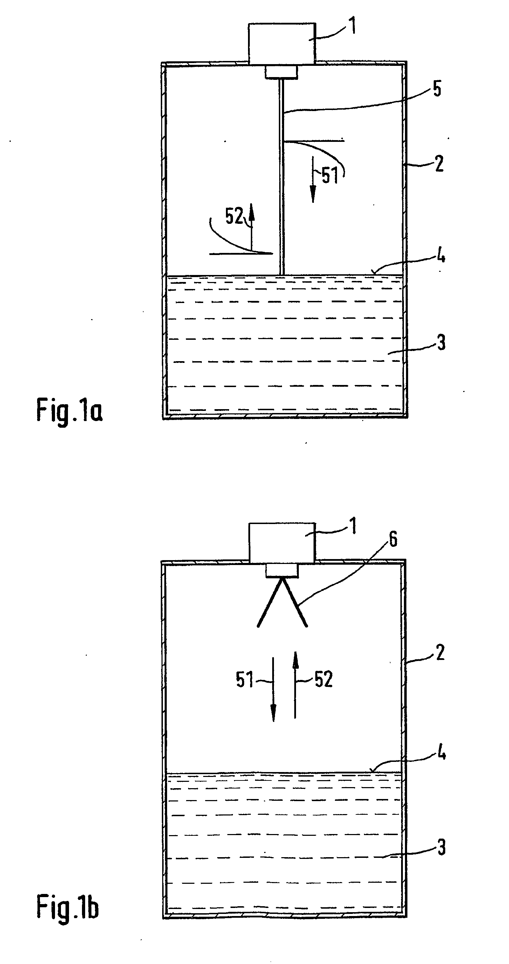

In Fig. 1a ist ein Füllstandsmeßgerät 1 dargestellt, das auf oder an einem Behälter 2 montiert ist und das dazu dient, einen Füllstand eines darin befindlichen Mediums 3 zu messen. Wie in Fig. 1 a gezeigt, wird vom Füllstandsmeßgerät 1 ein Sendesignal 51 erzeugt und in Richtung auf das Medium 3 ausgesendet. Das Sendesignal 51 wird dazu auf einem in das Medium 3 eintauchenden Wellenleiter 5 geführt und an einer Mediumoberfläche 4 reflektiert. Das reflektierte Signal 52 wird zum Füllstandsmeßgerät 1 geführt, wo eine für den zu bestimmenden Füllstand notwendige Information über einen Abstand zwischen Füllstandsmeßgerät 1 und Medlumoberfläche 4 gewonnen wird. Fig. 1a veranschaulicht auch eine mögliche Signalform des Sende- bzw. reflektierten Signals 51 bzw. 52.

Fig. 1b zeigt das Füllstandsmeßgerät 1, bei dem aber im Unterschied zur Fig. 1 a das zur Füllstandsmessung dienende Sendesignal 51 nicht geführt sondern mittels einer Antenne 6 in Richtung auf das Medium 3 ausgesendet wird. Die Antenne 6 dient gleichfalls dazu, das an der Mediumoberfläche 4 reflektierte Signal 52 zu empfangen.

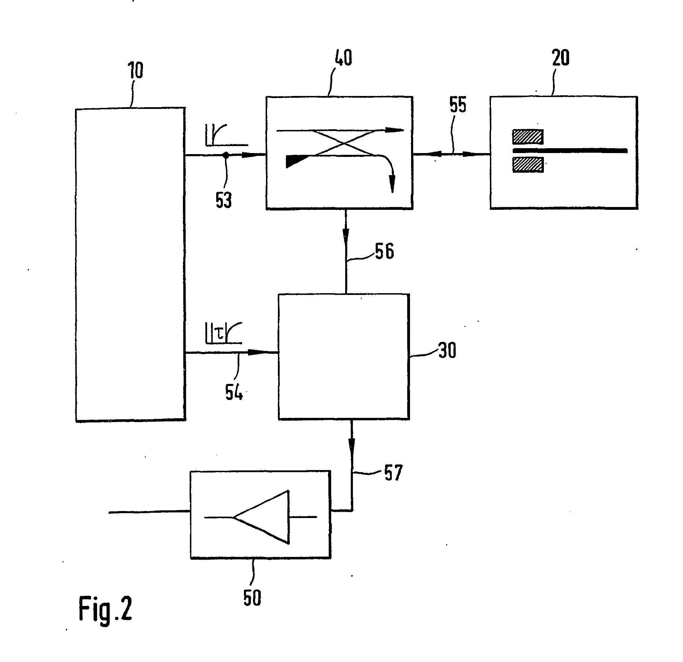

Der Wellenleiter 5 und die Antenne 6 stellen jeweils eine Sende - und/oder Empfangsvorrichtung 20 (siehe dazu auch Fig. 2) des Füllstandsmeßgerätes 1 dar. Nachfolgend wird der Begriff Sende - und/oder Empfangsvorrichtung 20 immer dann verwendet, wenn dabei entweder ein Wellenleiter 5 oder eine Antenne 6 verwendet werden kann.

Fig. 2 veranschaulicht einen Aufbau eines Füllstandsmeßgeräts 1 in schematischer Darstellung, das sich im wesentlichen eine Signalerzeugungsvorrichtung 10, Sende - und/oder Empfangsvorrichtung 20, einer Abtastvorrichtung 30 und einer Koppelvorrichtung 40 umfaßt. Die Koppelvorrichtung 40 verbindet dabei die Signalerzeugungsvorrichtung 10 mit der Sende - und/oder Empfangsvorrichtung 20 sowie die letztere mit der Abtastvorrichtung 30.

Ein in der Signalerzeugungsvorrichtung 10 erzeugtes Hochfrequenzsignal 53 wird über die Koppelvorrichtung 40 als Sendesignal 55 auf die Sende - und/oder Empfangsvorrichtung 20 gegeben und von dort zum Medium 3 (siehe Fig. 1a, b) gesendet. Das reflektierte Signal 52 (siehe Fig. 1a, b) wird von der Sende - und/oder Empfangsvorrichtung 20 aufgenommen und über die Koppelvorrichtung 40 an die Abtastvorrichtung 30 übergeben.

Ein von der Signalerzeugungsvorrichtung 10 erzeugtes Abtaststeuersignal 54 steuert die Abtastung des von der Sende - und/oder Empfangsvorrichtung 20 erhaltenen reflektierten Signals 52. Ein am Ausgang der Abtastvorrichtung 30 erhaltenes zeitgedehntes Empfangssignal 57 wird vorzugsweise zur besseren weiteren Verarbeitung in einem Verstärker 50 verstärkt.

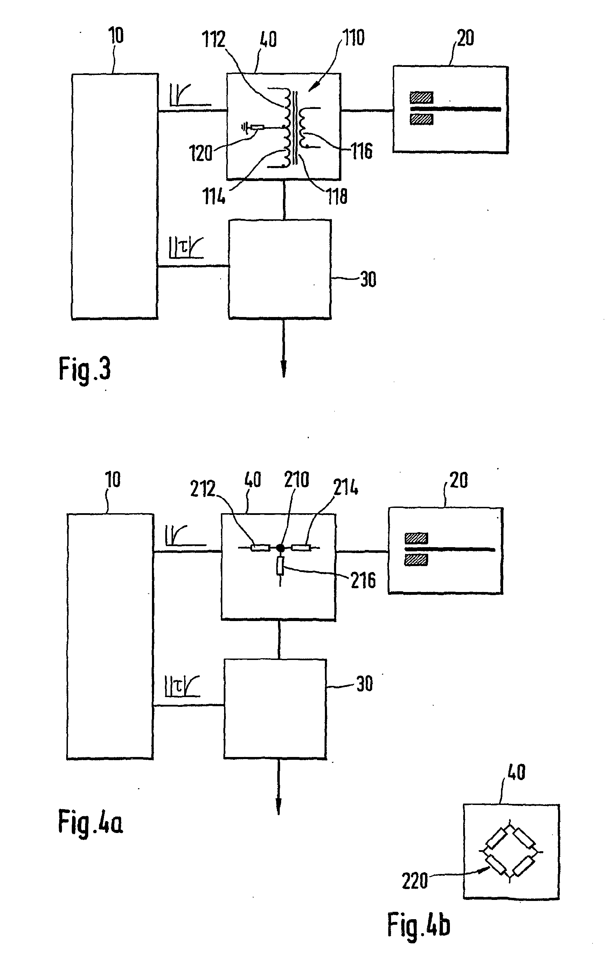

Fig. 3 zeigt in schematischer Darstellung einer ersten Variante 100 eines Füllstandsmeßgerätes 1 nach der Erfindung. In diesem Fall umfaßt die Koppelvorrichtung 40 erfindungsgemäß einen Transformator 110. Der Transformator 110 weist eine Sendewicklung112, eine Empfangswicklung 114 und eine Wicklung zur Ankopplung der Sende - und/oder Empfangsvorrichtung 116 auf und ist in der in Fig . 3 dargestellten Weise beschaltet. Eine durch den Transformator 110 erreichte galvanische Trennung 118 des Sende- vom Empfangsteil des Füllstandsmeßgeräts 1 erlaubt seinen Einsatz auch in explosionsgefährden Umgebungen. Ein Abschlußwiderstand 120 dient zur Anpassung der Koppelvorrichtung 40 mit dem Transformator 110 an die Signalerzeugungsvorrichtung, die Sende - und/oder Empfangsvorrichtung 20 und die Abtastvorrichtung 30.

In Fig. 4 ist einer zweite Variante 200 eines Füllstandsmeßgerätes 1 nach der Erfindung dargestellt. Hier umfaßt die Koppelvorrichtung 40 erfindungsgemäß mindestens einen Leitungsknoten 210. Der Leitungsknoten 210 ist vorzugsweise mit drei Koppelwiderständen 212,214 und 216 in der in Fig. 4 dargestellten Weise beschaltet. Die Koppelwiderständen 212, 214 und 216 können auch als komplexe Widerstände ausgeführt sein, z.B. als Kondensatoren, so daß auf diese Weise wiederum eine galvanische Trennung wie bei der ersten Variante der Erfindung 100 (siehe dazu Fig. 3) erreicht werden kann. Außerdem ist es denkbar, die Koppelwiderständen 212, 214 und 216 gemischt-komplex auszuführen oder sogar gegen Null gehen zu lassen. Im letzteren Fall wäre dann außer dem Knoten 210 keine weitere Beschaltung notwendig. Eine solche Ausführung ist möglich, wenn bereits durch geeignete Wahl der Quell- und Lastimpedanzen der Signalerzeugungsvorrichtung 10, der Sende - und/oder Empfangsvorrichtung 20 und der Abtastvorrichtung 30 aufeinander abgestimmt sind.

Eine andere und besondere Ausführungsform der erfindungsgemäßen Koppelvorrichtung 40 nach Fig. 4a ist in Fig. 4b schematisch dargestellt. In diesem Fall sind die Koppelwiderständen 212, 214 und 216 zu einer Koppelbrücke 220 zusammengeschaltet.

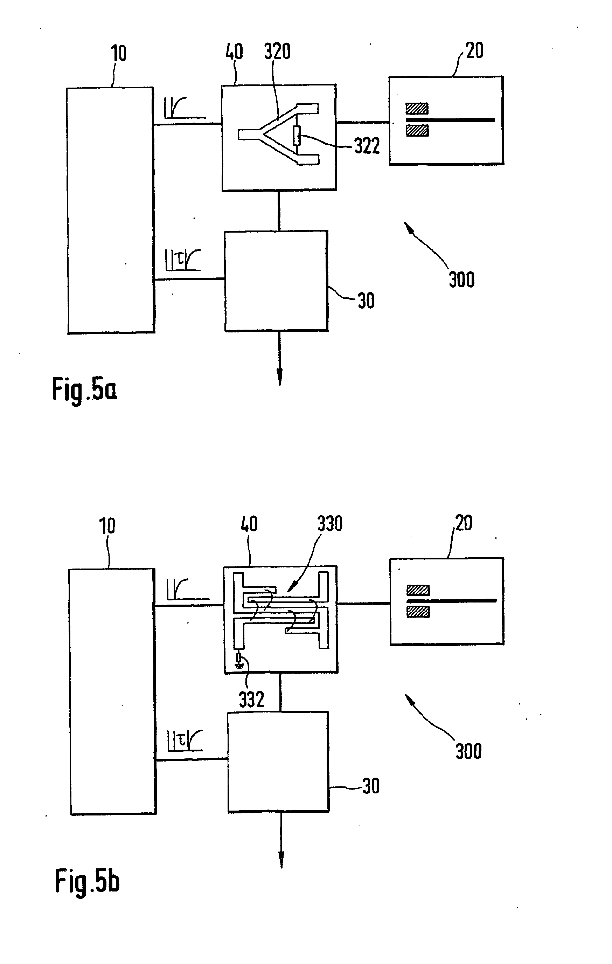

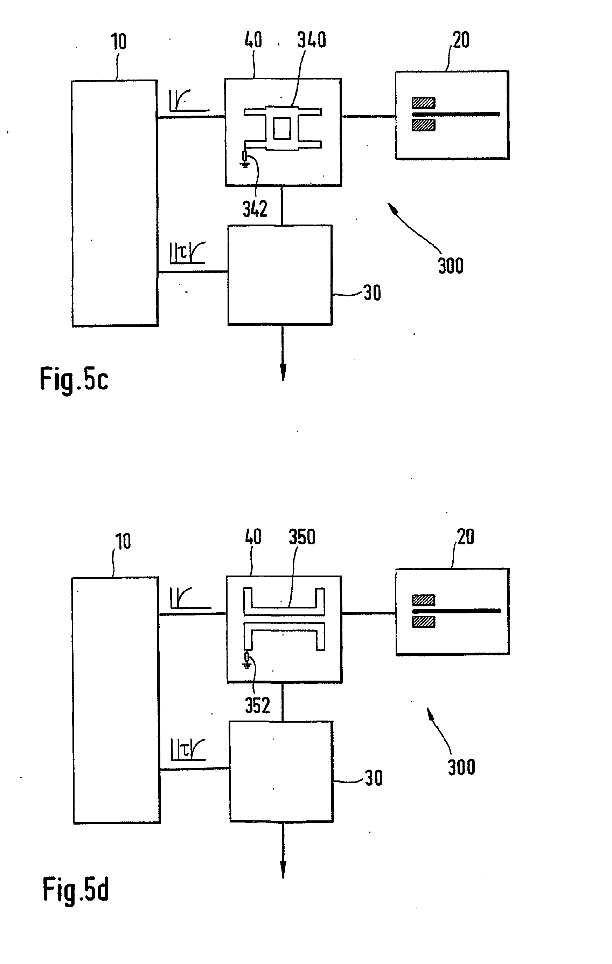

Die Fig. 5a bis 5e zeigen bevorzugte Ausführungsformen einer dritte Variante 300 eines Füllstandsmeßgerätes 1 nach der Erfindung, bei der die Koppelvorrichtung 40 jeweils einen λ/4-Koppler umfaßt. Bei der in Fig. 5a dargestellten Ausführung handelt es sich um einen sogenannten Wilkinsonkoppler 320, der in der dort gezeigten Weise und mit einem Abschlußwiderstand 322 beschaltet ist. Fig. 5b zeigt eine Koppelvorrichtung 40, die einen sogenannten Langekoppler 330 umfaßt, der in der dort gezeigten Weise und mit einem Abschlußwiderstand 332 beschaltet ist. In Fig. 5c ist eine Koppelvorrichtung 40 gezeigt, die einen Richtkoppler 340 umfaßt, der in der dort gezeigten Weise und mit einem Abschlußwiderstand 342 beschaltet ist. Die Fig. 5d zeigt eine weitere Koppelvorrichtung 40, die einen Leitungskoppler 350 umfaßt, der in der dort gezeigten Weise und mit einem Abschlußwiderstand 352 beschaltet ist. Die in den Fig. 5a bis d gezeigten λ/4-Koppler können auf einfache Weise und damit kostengünstig als passive Strukturen auf üblichen Leiterplatten realisiert werden. Solche Koppelvorrichtung 40 mit ®/4-Kopplern sind besonders für Burstsignale und hohe Frequenzen geeignet, wie sie z.B. für hochgenaue Messung bei kleinen Distanzen verwendet werden.

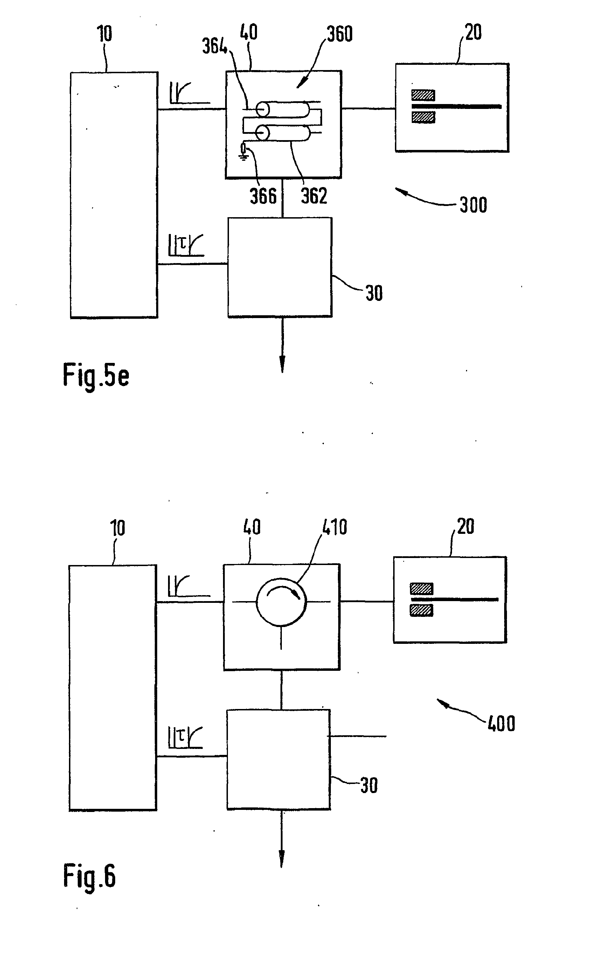

Fig. 5e zeigt noch einen anderen λ/4-Koppler, der einen Koaxialleitungskoppler 360 mit Innenleiter 364 und Schirmleiter 362 umfaßt und der in der dort gezeigten Weise und mit einem Abschlußwiderstand 366 beschaltet ist. Eine solche Koppelvorrichtung 40 mit einem Koaxialleitungskoppler 360 eignet sich wegen seines Aufbaus besonders für Burstsignale geringer Frequenzen, z. B. kleiner 1 GHz, und somit für Anwendungen zur Bestimmung großer Distanzen.

In Fig. 6 ist eine weitere Variante 400 eines Füllstandsmeßgerätes 1 dargestellt. Hier umfaßt die Koppelvorrichtung 40 einen Zirkulator 410. Eine solche Koppelvorrichtung 40 beruht ähnlich den in den Fig. 5a bis 5d dargestellten Kopplungsvorrichtungen ebenfalls auf λ/4-Resonanzstrukturen und kann ähnlich schmalbandig ausgelegt werden.

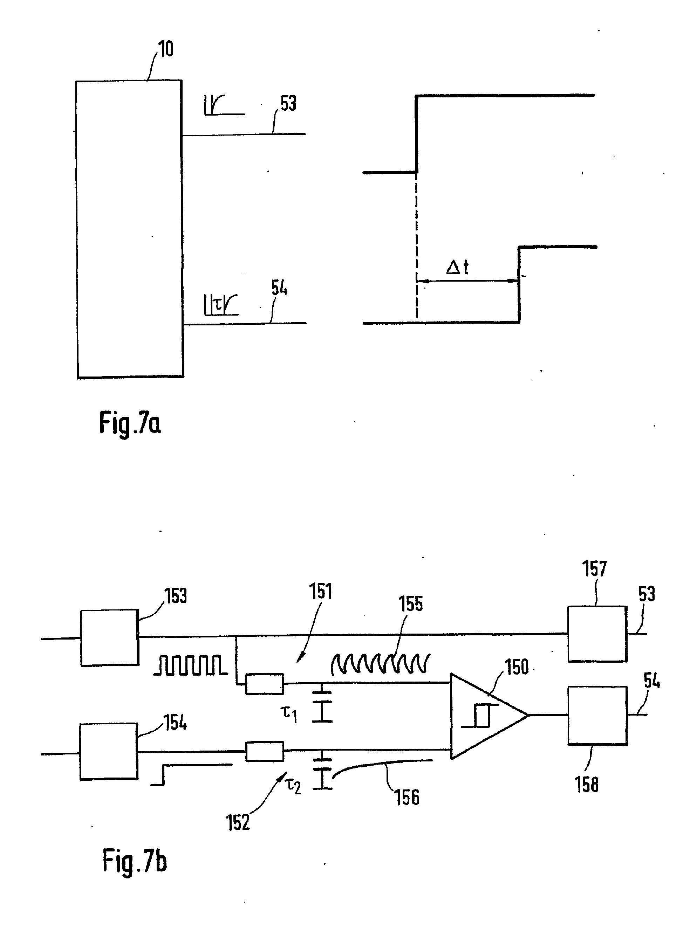

In den Fig. 7b bis 7d sind verschiedene Ausführungsformen von Signalerzeugungsvorrichtungen 10 dargestellt, wie sie mit jeder der bisher in den Fig. 3 bis 6 gezeigten Varianten eines erfindungsgemäßen Füllstandsmeßgeräts 1 verwendet werden.

Die Fig. 7a dient zur Erläuterung der Funktion der Signalerzeugungsvorrichtung 10. Wie bereits oben erwähnt, erzeugt die Signalerzeugungsvorrichtung 10 das periodische Hochfrequenzsendesignal 53 und das zu diesem synchrone Abtaststeuersignal 54. Das Abtaststeuersignal 54 ist in seiner Verzögerungszeit definiert steuerbar und wird der Abtastvorrichtung 30 zugeführt. Ein Zeitunterschied Δt zwischen dem Hochfrequenzsendesignal 53 und Abtaststeuersignal 54 ist ein direktes Maß für den zum jeweiligen Zeitpunkt gemessenen Distanzpunkt zwischen Füllstandsmeßgerät 1 und Mediumoberfläche 4 (siehe Fig. 1)und ist über die Lichtgeschwindigkeit miteinander verknüpft. Es werden verschiedene Signalerzeugungsvonichtung 10 vorgestellt, die sich in Linearität, Drift und Genauigkeit unterscheiden und damit das Distanzmeßergebnis unterschiedlich beeinflussen.

Die in Fig. 7b gezeigte Signalerzeugungsvorrichtung 10 umfaßt einen Komparator 150 sowie eine erste R-C-Kombination 151 und eine zweite R-C-Kombination. Die in ihrer Zeitkonstante unterschiedlichen RC-Glieder 151, 152 werden auf den schnellen Spannungskomparator 150 geschaltet. Das schnellere RC-Glied 151 wird von einem in einem Sendetakt-Oszillator 153 erzeugten Rechtecksignal periodisch ge- und entladen. Das langsamere RC-Glied 152 wird mit jedem Meßzyklus einmal ge- und entladen, wobei der Meßzyklus durch ein von einer Meßzyklus-Startschaltung 154 geliefertes Signal bestimmt wird.

Ein Meßzyklus besteht je nach zu messender Auflösung und Distanz für die Füllstandsmessung aus einigen 10 000 Sendetakten. Dadurch, daß die Ladespannung an RC-Glied 152 sehr langsam ansteigt, ergibt sich mit jedem neuen Sendetakt eine andere Schaltschwelle am Komparator 150 für die Ladespannung an RC-Glied 151. Damit wird der Abtasttakt mit jedem Sendezyklus um einen konstanten Zeitschritt gegenüber dem Sendetakt verzögert. Obwohl die RC-Glieder 151, 152 nach einer e-Funktion geladen und entladen werden, folgen die resultierenden Zeltschritte einer linearen Funktion, so daß die Distanzabtastschritte ebenfalls linear dargestellt werden können. Der Zeitdehnungsfaktor ergibt sich direkt aus dem Verhältnis der Zeitkonstanten der beiden RC-Glieder 151, 152.

Um das Hochfrequenzsendesignal 53 zu erhalten, wird das Ausgangssignal des Oszillators 153 einer Umformung in einer Sendesignal-Formerstufe 157 unterzogen. In dieser Sendesignal-Formerstufe 157 werden je nach gewünschtem Anwendungsfall Hochfrequenzsendesignale 53 als Burst- oder Pulssignale geformt. In ähnlicher Weise wird das Ausgangssignal des Komparators 150 einer Pulsformung in der Abtastsignal-Formerstufe158 unterzogen, um das Abtastsignal 54 entsprechend der Signalform des Hochfrequenzsendesignales 53, Burst oder Puls; zu erzeugen.

Die in Fig. 7b dargestellte Signalerzeugungsvorrichtung 10 mit dem Komparator 150 ist einfach aufzubauen, ist für einfache Anwendungen hinreichend genau und sehr kostengünstig.

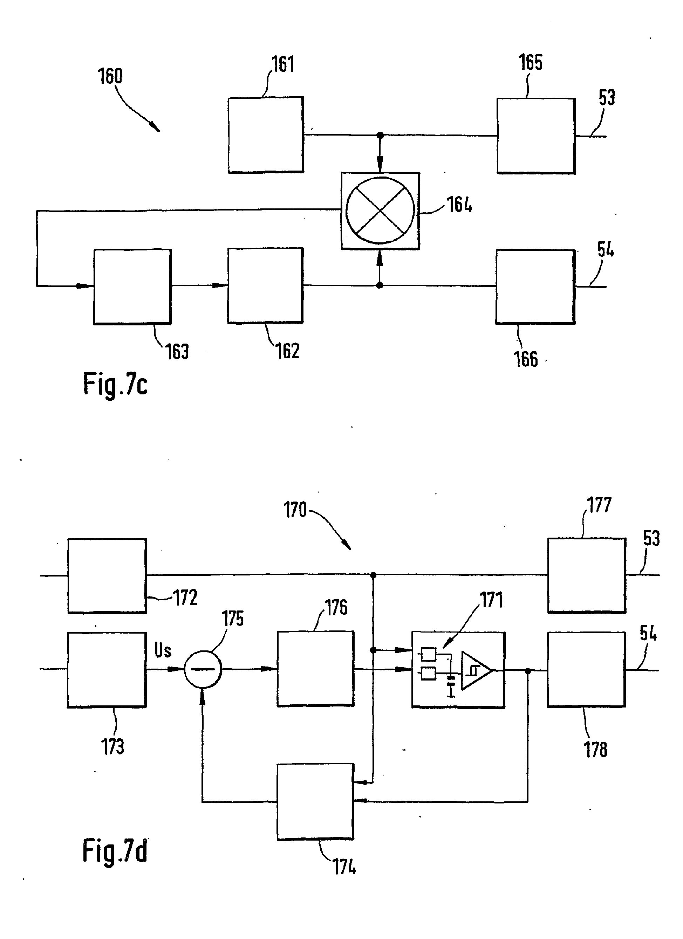

In Fig. 7c ist eine weitere Ausführungsform der Signalerzeugungsvorrichtung 10 gezeigt, die in diesem Fall eine Schwebungsoszillatorschaltung 160 umfaßt.

Ein Festfrequenzoszillator 161 gibt ähnlich dem Sendetakt-Oszillator 153 (siehe Fig. 7b) den Sendetakt vor. Ein einstellbarer Oszillator 162, der sich in seiner Arbeitsfrequenz nur wenig von der des Festfrequenzoszillators 161 unterscheidet, erzeugt ein Abtaststeuersignal.

Durch den geringen Frequenzunterschied läuft der Oszillator 162 mit jeder Frequenzperiode dem Festfrequenzoszillator 161 um einen geringen Zeitschritt Δt mehr hinterher. Um den Zeitschritt definiert zu erzeugen, wird der Oszillator 162 über die entstehende Schwebungsfrequenz, die sich durch Mischung an einem Schwebungsdetektor 164 ergibt, in seiner Frequenz geregelt. Dazu dient eine Einstellschaltung 163, die aus dem Ausgangssignal des Schwebungsdetektors 164 ein Steuersignal für den einstellbaren Oszillator 162 generiert.

Der Zeitdehnungsfaktor ergibt sich aus der Frequenz des Festfrequenzoszillators 161 und der Schwebungsfrequenz des Schwebungsdetektors 164. Wenn die in Fig. 7c dargestellte Schaltung mit Quarzoszillatoren aufgebaut wird, zeichnet sie sich durch besondere Stabilität und Genauigkeit aus. In ähnlicher Weise wie bei der in Fig. 7b dargestellten Ausführungsform kann die gewünschte Burst- bzw. Pulssignalform des Abtastsignales 54 bzw. des Hochfrequenzsendesignales 53 durch Pulsformerstufen 160 bzw. 165 gewonnen werden.

In Fig. 7d ist eine andere Ausführungsform der Signalerzeugungsvorrichtung 10 gezeigt, die in diesem Fall eine geregelte Verzögerungsschaltung 170 enthält. Ein RC-Glied 171 bestehend aus zwei Widerständen und einem Kondensator wird zum einen von einem Festfrequenzoszillator 172 angesteuert, der den Sendetakt vorgibt, zum anderen indirekt durch einen Sägezahngenerator 173, dessen Sägezahnspannung Us ein Maß für den zu messenden Distanzpunkt darstellt.

Da das Spannungs-Zeit-Verhalten des RC-Gliedes 171 eine e-Funktion ist, wird eine Linearisierung über eine Rückkoppelschleife 174 realisiert, die über den Subtrahierer 175 ein Korrektursignal einspeist. In Kombination mit dem nachfolgenden Integrierer 176 liegt eine geschlossene Regelschleife vor, so daß die Zeitschritte direkt proportional zu den Sägezahnspannungsschritten sind. Auf ähnliche Weise wie in Fig. 7c und Fig. 7d kann die gewünschte Burst- bzw. Pulssignalform des Abtastsignales 54 bzw. des Hochfrequenzsendesignales 53 durch Pulsformerstufen 178 bzw. 177 gewonnen werden.

Vorteilhaft bei dieser Ausgestaltung der Signalerzeugungsvorrichtung 170 ist die gute Genauigkeit bei vergleichsweise günstigen Kosten. Darüber hinaus ist eine direkte Ansteuerung mit Hilfe eines DA-Wandlers möglich.

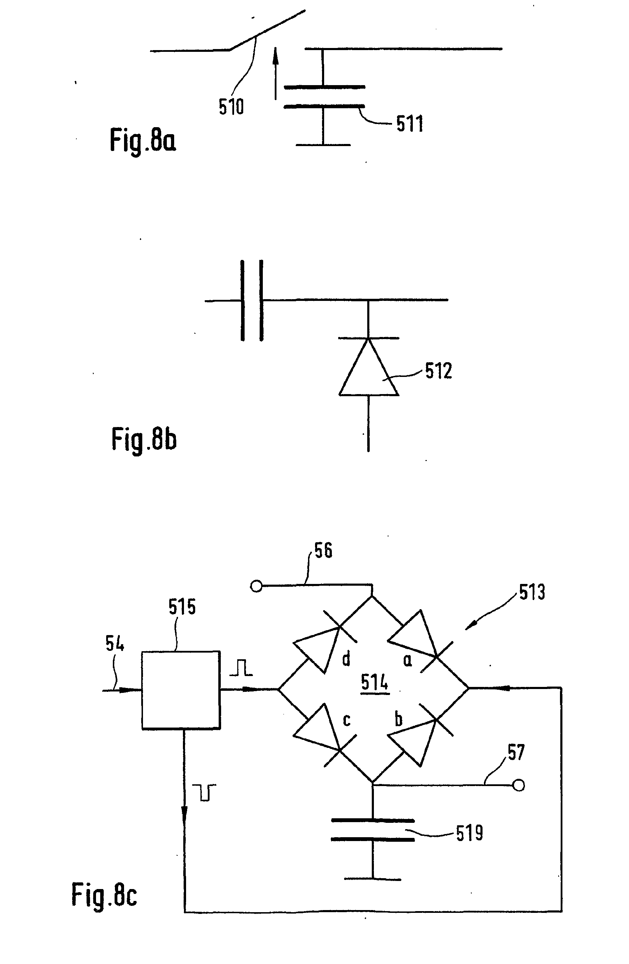

Die Fig. 8a bis 8d zeigen verschiedene Ausführungsformen von Abtastvorrichtungen, wie sie mit jeder der bisher in den Fig. 3 bis 6 gezeigten Varianten eines erfindungsgemäßen Füllstandsmeßgeräts 1 verwendet werden können.

Die Abtastvorrichtung 30 dient dazu, wie Fig. 2 dargestellt, das von der Kopplervorrichtung 40 gelieferte reflektierte Hochfrequenzempfangssignal 56 in ein zeitgedehntes Empfangssignal 57 umzusetzen. Dieser Abtastvorgang wird in jeder Sendetaktperiode einmal durchgeführt. Der Zeitpunkt der Abtastung wird durch das Abtaststeuersignal 54 der Signalerzeugungsvorrichtung 10 vorgegeben.

Die schematische Darstellung einer Abtastvorrichtung in Fig. 8a. zeigt ein Schaltelement 510 sowie einen Ladekondensator 511 am Ausgang dieses Schaltelementes. Diese Abtastvorrichtung ist auch unter dem Begriff Sample&Hold Schaltung allgemein bekannt.

Zur Abtastung schneller Signale wird das Schaltelement 510 wie in Fig. 8b gezeigt durch eine schnelle Schaltdiode 512 ersetzt. Dabei ist die Anordnung in Fig. 8b beispielhaft, ein vertauschen von Kondensator und Schaltdiode ist ebenfalls möglich.

In Fig. 8c ist anstelle eines Schaltelementes eine Diodenbrücke 513 dargestellt, die vier schnelle Schaltdioden 514a bis 514d in der gezeigten Konfiguration enthält. Diese Diodenbrücke wird im Gegensatz zum Ausführungsbeispiel in Fig. 8b durch komplementäre Signale angesteuert, die durch den Pulsinverter 515 erzeugt werden. Das Eingangssteuersignal des Pulsinverters wird vom Abtaststeuersignal 54 der Signalerzeugungsvorrichtung 10 geliefert. Das hochfrequente reflektierte Signal 56, siehe auch Fig. 2, der Koppelvorrichtung 40 wird mit einem Eingang der Diodenbrücke 513 verbunden. Das zeitgedehnte Empfangssignal 57 dieser Abtastvorrichtung steht am Ladekondensator 519 zur Verfügung.

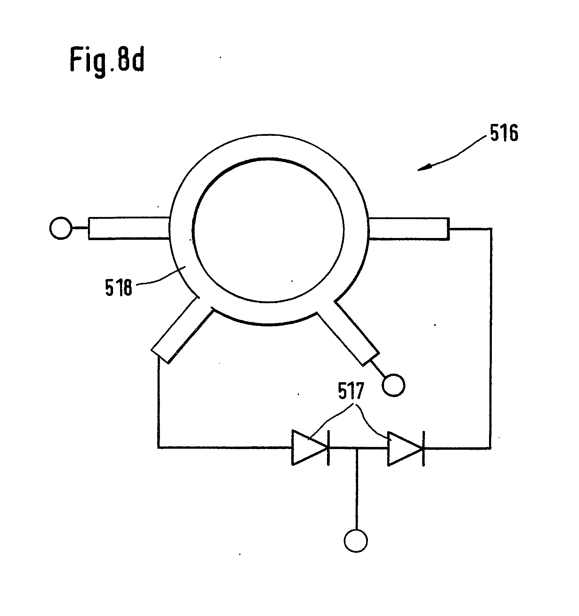

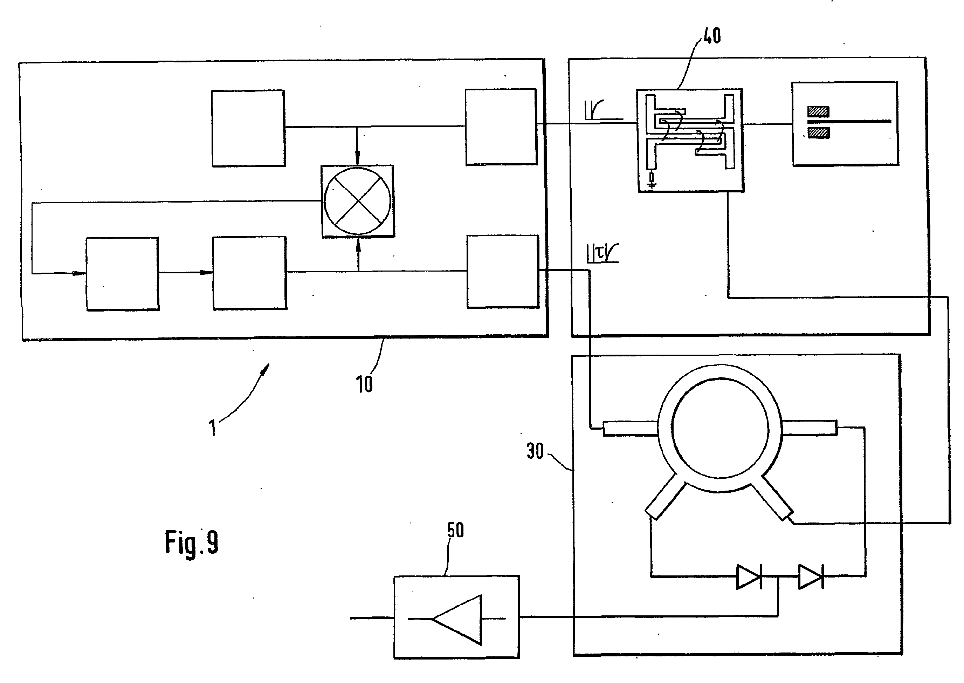

Die bisher in Fig. 8a bis 8c beschriebenen Abtastvorrichtungen eigenen sich in besonderer Weise zur Abtastung von Pulssignalen. Für die Abtastung von Burstsignalen dagegen ist eine Anordnung gemäß Fig. 8d vorteilhaft. Dabei wird eine symmetrische Mischerschaltung 516 verwendet, die aus einem Ringhybrid 518 und zwei Mischerdioden 517 besteht. Die Funktionsweise dieser Mischerschaltung wird nachfolgend anhand einer schematischen Darstellung eines vollständigen Füllstandsmeßgerätes in Fig.9 beschrieben.

Fig. 9 zeigt eine Signalerzeugungsvonichtung 10 eines Füllstandsmeßgeräts 1 nach der Erfindung mit einer Schwebungsgeneratorschaltung 160 nach Fig. 7c, die mit einer Koppelvorrichtung 40, die als Langekoppler 330 (siehe Fig. 5b) ausgeführt ist, und mit einer Abtastvorrichtung 30 nach Fig. 8d verbunden ist. Die Pulsformerstufen am Ausgang der Schwebungsgeneratorschaltung 160 erzeugen in diesem Beispiel Burstsignale, die zur Zeitdehnung des reflektierten Empfangssignales 56 eine Mischerschaltung erfordern. Als solche hat sich wegen ihres relativ einfachen Aufbaus in Verbindung mit einer möglichen planaren Ausführung die Anordnung gemäß Fig. 8d bewährt.

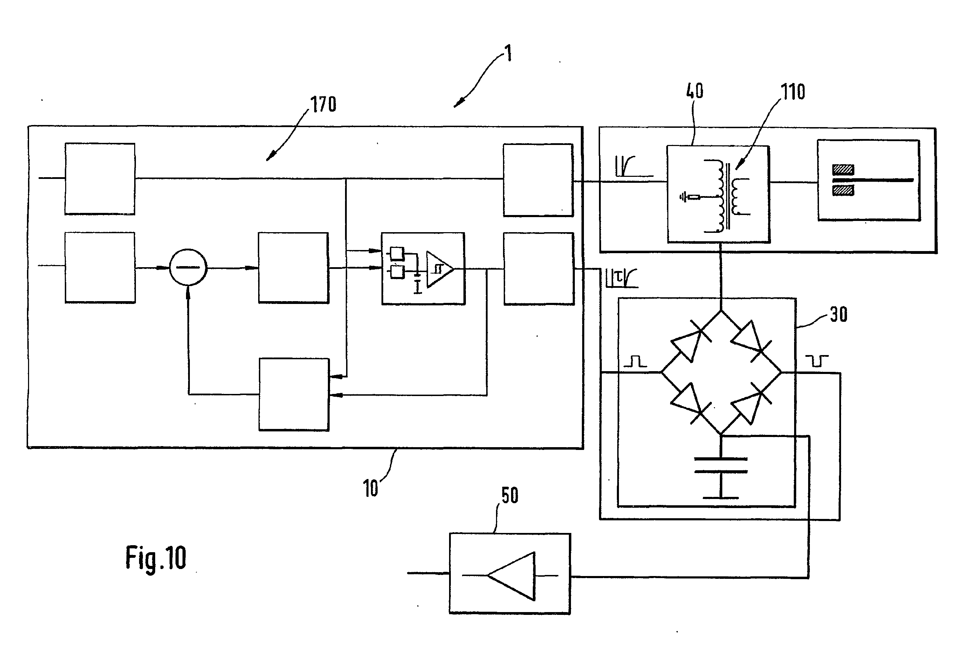

Ein Füllstandsmeßgerät 1 nach der Erfindung, welches sich besonders für Pulssignale eignet, ist in Fig. 10 gezeigt. Dabei umfaßt die Signalerzeugungsvorrichtung 10 eine geregelte Verzögerungsschaltung 170 nach Fig. 7d, die mit einer Koppelvorrichtung 40, die als Transformator 110 (siehe Fig. 3) ausgeführt ist, und mit einer Abtastvorrichtung 30 nach Fig. 8c verbunden ist. Die Pulsformerstufen am Ausgang der Signalerzeugungsvorrichtung 10 erzeugen in diesem Beispiel Pulssignale. Zur Zeitdehnung des reflektierten Empfangssignales 56 ist eine Abtastvorrichtung 30 mit einem Diodenring 513 aus Fig. 8c vorgesehen. Die gesamte Anordung ermöglicht ein preisgünstiges und gleichermaßen genaues Füllstandsmeßgerät.

## Patentansprüche

1. Füllstandmeßgerät mit einer Signalerzeugungsvorrichtung zur Erzeugung sowohl eines Hochfrequenzsendesignales und eines Abtaststeuersignales zur Abtastung des Hochfrequenzsignales , eine Sende- und/oder Empfangsvorrichtung und eine durch das Abtaststeuersignal gesteuerte Abtastvorrichtung zur Abtastung des Hochfrequenzsignales, wobei die Signalerzeugungsvorrichtung mit der Sende - und/oder Empfangsvorrichtung und die Abtastvorrichtung mit der Sende - und/oder Empfangsvorrichtung durch eine Koppelvorrichtung direkt verbunden sind, die einen Transformator oder mindestens einen Leitungsknoten oder einen λ/4 - Koppler umfaßt.

2. Füllstandsmeßgerät nach Anspruch 1, bei dem der λ/4 - Koppler ein Wilkinsonkoppler ist.

3. Füllstandsmeßgerät nach Anspruch 1, bei dem der λ/4 - Koppler ein Langekoppler ist.

4. Füllstandsmeßgerät nach Anspruch 1, bei dem der λ/4 - Koppler ein Richtkoppler ist.

5. Füllstandsmeßgerät nach Anspruch 1, bei dem der λ/4 - Koppler ein Leitungskoppler ist.

6. Füllstandsmeßgerät nach Anspruch 1, bei dem der λ/4 - Koppler ein Koaxialleitungskoppler ist.

7. Füllstandsmeßgerät nach einem der Ansprüche 1 bis 6, bei dem die Signalerzeugungsvorrichtung eine Komparatorschaltung umfaßt, die zur Verzögerung des Abtastsignals gegenüber dem Hochfrequenzsendesignal dient.

8. Füllstandsmeßgerät nach einem der Ansprüche 1 bis 6, bei dem die Signalerzeugungsvorrichtung eine Schwebungsoszillatorschaltung umfaßt, die zur Verzögerung des Abtastsignals gegenüber dem Hochfrequenzsendesignal dient.

9. Füllstandsmeßgerät nach einem der Ansprüche 1 bis 6, bei dem die Signalerzeugungsvorrichtung eine geregelte Verzögerungsschaltung umfaßt, die zur Verzögerung des Abtastsignals gegenüber dem Hochfrequenzsendesignal dient.

10. Füllstandsmeßgerät nach einem der Ansprüche 1 bis 9, bei dem die Abtastvorrichtung eine Diodenringschaltung und einen Haltekondensator umfaßt.

11. Füllstandsmeßgerät nach einem der Ansprüche 1 bis 9, bei dem die Abtastvorrichtung wenigstens eine Diode und einen Haltekondensator umfaßt.

12. Füllstandsmeßgerät nach einem der Ansprüche 1 bis 9, bei dem die Abtastvorrichtung eine Mischerschaltung umfaßt.

13. Füllstandsmeßgerät nach einem der Ansprüche 1 bis 9 oder 12, bei dem das Hochfrequenzsendesignal ein Burstsignal ist.

## Claims

1. Level transmitter with a signal generation unit to generate both a high-frequency transmission signal and a scan control signal to scan the high-frequency signal, a transmission and/or receiver unit and a scan unit, controlled by the scan control signal, designed to scan the high-frequency signal, wherein the signal generation unit is directly connected with the transmission and/or receiver unit and the scan unit with the transmission and/or receiver unit by means of a coupling unit, said coupling unit comprising a transformer or at least a line node or a λ/4 coupler.

2. Level transmitter as claimed in Claim 1, wherein the λ/4 coupler is a Wilkinson coupler.

3. Level transmitter as claimed in Claim 1, wherein the λ/4 coupler is a Lange coupler.

4. Level transmitter as claimed in Claim 1, wherein the λ/4 coupler is a directional coupler.

5. Level transmitter as claimed in Claim 1, wherein the λ/4 coupler is a line coupler.

6. Level transmitter as claimed in Claim 1, wherein the λ/4 coupler is a coaxial line coupler.

7. Level transmitter as claimed in one of the Claims 1 to 6, wherein the signal generation unit comprises a comparator circuit which is used to delay the scan signal in relation to the high-frequency transmission signal.

8. Level transmitter as claimed in one of the Claims 1 to 6, wherein the signal generation unit comprises a beat frequency oscillator circuit which is used to delay the scan signal in relation to the high-frequency transmission signal.

9. Level transmitter as claimed in one of the Claims 1 to 6, wherein the signal generation unit comprises a regulated delay circuit which is used to delay the scan signal in relation to the high-frequency transmission signal.

10. Level transmitter as claimed in one of the Claims 1 to 9, wherein the scan unit comprises a diode ring circuit and a holding capacitor.

11. Level transmitter as claimed in one of the Claims 1 to 9, wherein the scan unit comprises at least a diode and a holding capacitor.

12. Level transmitter as claimed in one of the Claims 1 to 9, wherein the scan unit comprises a mixer circuit.

13. Level transmitter as claimed in one of the Claims 1 to 9 or 12, wherein the high-frequency transmission signal is a burst signal.

## Revendications

1. Transmetteur de niveau avec un dispositif générateur de signaux destiné à la génération à la fois d'un signal d'émission haute fréquence et d'un signal de commande d'échantillonnage destiné à l'échantillonnage du signal haute fréquence, avec un dispositif d'émission et/ou de réception et un dispositif d'échantillonnage commandé par le signal de commande d'échantillonnage et destiné à l'échantillonnage du signal haute fréquence, le dispositif générateur de signaux étant relié directement avec le dispositif d'émission et/ou de réception et le dispositif d'échantillonnage avec le dispositif d'émission et/ou de réception par l'intermédiaire d'un dispositif de couplage, lequel comprend un transformateur ou au moins un noeud de ligne ou un coupleur λ/4.

2. Transmetteur selon la revendication 1, pour lequel le coupleur λ/4 est un coupleur de Wilkinson.

3. Transmetteur selon la revendication 1, pour lequel le coupleur λ/4 est un coupleur de Lange.

4. Transmetteur selon la revendication 1, pour lequel le coupleur λ/4 est un coupleur directif.

5. Transmetteur selon la revendication 1, pour lequel le coupleur λ/4 est un coupleur de ligne.

6. Transmetteur selon la revendication 1, pour lequel le coupleur λ/4 est un coupleur de ligne coaxiale.

7. Transmetteur selon l'une des revendications 1 à 6, pour lequel le dispositif générateur de signaux comprend un circuit comparateur, qui sert à la temporisation du signal d'échantillonnage par rapport au signal d'émission haute fréquence

8. Transmetteur selon l'une des revendications 1 à 6, pour lequel le dispositif générateur de signaux comprend un circuit oscillateur à battement de fréquence, qui sert à la temporisation du signal d'échantillonnage par rapport au signal d'émission haute fréquence.

9. Transmetteur selon l'une des revendications 1 à 6, pour lequel le dispositif générateur de signaux comprend un circuit de temporisation régulé, qui sert à la temporisation du signal d'échantillonnage par rapport au signal d'émission haute fréquence.

10. Transmetteur selon l'une des revendications 1 à 9, pour lequel le dispositif d'échantillonnage comprend un circuit annulaire de diodes et un condensateur de maintien.

11. Transmetteur selon l'une des revendications 1 à 9, pour lequel le dispositif d'échantillonnage comprend au moins une diode et un condensateur de maintien.

12. Transmetteur selon l'une des revendications 1 à 9, pour lequel le dispositif d'échantillonnage est un circuit mélangeur.

13. Transmetteur selon l'une des revendications 1 à 9 ou 12, pour lequel le signal d'émission haute fréquence est un signal en rafale.
